# EUROPEAN PATENT APPLICATION

(11) **EP 1 069 515 A1**
(43) Date of publication of application: **17.01.2001**
(21) Application number: 00115316.2
(22) Date of filing: 14.07.2000
(51) Int. Cl.: G06F 17/30

(54) **Method and apparatus for web information extraction service**

(30) Priority: 15.07.1999 KR 9928638
(71) Applicant: Information and Communications University, Taejon, 305-600 (KR)
(72) Inventor: Hyun, Soon Joo, Taejon, 305-600 (KR); Kim, Gyu Baek, Taejon, 305-600 (KR)
(74) Representative: Goddar, Heinz J., Dr.

(57) **Abstract**

A method provides Web information extraction service in an intelligent agent system having a client module and a server module. First of all, a Web browser in the client module is driven and connected to the server module via a network. The client module, a Java applet is downloaded from the server module to form a user interface window. Next, a target uniform resource locator (URL), a keyword and preset depth first search information are inputted and they are then sent to the server module. Web sites corresponding to the target URL and URL's of lower layers linked thereto are searched based on the depth first search information. Web information corresponding to the keyword is extracted from Web pages of the searched sites. Thereafter, the extracted information is processed and stored as a single user file. Finally, the stored information is transferred to the client module when all lower layer's URLs corresponding to the depth first search information are processed, to enable the user to browse the information using the Web browser.

## Description

The present invention relates to an intelligent Java agent system; and, more particularly, to a method and apparatus for Web information extraction service by using Java language.

A Web has become one of the most widely used information service system worldwide. It is a worldwide Internet connection of individual information resources in diverse areas and for various purposes. Internet users can have an access to Web sites to search for desired information in the Web sites. As the number of sites increases and the size of documents keeps growing, Web users face difficulties in searching and collecting information pieces that are usually dispersed over a large number of Web pages. There are two notorious problems in manually searching for the Web information within a hyper space of Web: disorientation and cognitive overload. The former implies the loss of current navigation position in the hyper space; and the latter implies user's burden to know exact site information such as uniform resource locator (URL) and directories in order to access desired Web sites.

In recent years, the convenience using the document search function offered by search engines such as Yahoo, Infoseek, AltaVista, etc, has been widely recognized by Web users. Typically, the search engines maintain index information drawn from the Web sites, classify them in a form that suits users and provide the classified index information (e.g., URLs, titles and a few lines of expert) via Web browsers. By using this function of the search engines, the URL index search space can be narrowed. Moreover, the URL index search space can further be narrowed down by another search engines, e.g., WebCompass and Microsoft Index Server, which employ sophisticated filtering and statistical techniques.

In so many cases, it may be preferred to extract and collect several interesting pieces of information into a single file form for easy and quick reference. To extract a relatively small amount of pieces of information which are usually dispersed throughout a large number of documents in the form of Web pages, in a conventional information extraction and collection scheme, a user manually looks into many hyperlink-connected Web pages, even after the user obtains a target URL with some partial information (e.g., title, abstract, etc.) from a search engine. The manual search and collection of even relatively few and small pieces of data (e.g., sentences, paragraphs) are obviously laborious tasks. This will cost the user a great deal of time and effort, and the results may often be unsatisfactory, missing some unknown amount of relevant information.

Most search engines that offer Web related information, on the other hand, employ a robot agent function. The robot agent function may be generally classified into four major functions: mirroring, statistical analysis, maintenance and resource discovery. Specifically, the mirroring function takes a structure of a specific site and fetches Web information from the specific site; the statistical analysis function looks into the number of hosts or servers; the maintenance function finds and eliminates a dead link in the search engine, etc.; and the resource discovery function automatically discovers required resources in their sites through an autonomy of the agent.

It is known that systems implemented based on these functions are Letizia, citation finder (CIFI), multi-owner maintenance spider (MOMspider), etc. In particular, a typical agent developed for the resource discovery on a dynamic Web is WebCrawler. This agent, however, has a limitation on that there is no intelligent element to choose hyperlinks for automatic navigation.

Some other systems, such as world wide web query system (W3QS) and World Wide Web-based information retrieval and extraction (WIRE), aim for intelligent searches with a superior performance over the robot agent. However, these systems employ relatively complicated query techniques to overcome the problem of overwhelming amount of search results from the existing search engines. Specifically, the W3QS requires user's input in the form of W3QL, a specially designed structured query language; and the WIRE requires user's input in the form of a query tree. The complicated query forms requested by the systems can be a serious burden to most of users who are familiar with the keyword-based query in the Web.

It is, therefore, an object of the present invention to provide a Web information extractor (WIE) to offer ordinary Web users an easy query way, an automatic hyperlink space search and a quick collection of desired contents with an intelligent information extraction algorithm.

In accordance with a preferred embodiment of the present invention, there is provided a method for Web information extraction service in an intelligent agent system having a client module and a server module, the method comprising the steps of:
(a) driving and connecting the Web browser to the server module;
(b) downloading, at the client module, Java applet from the server module to form a user interface window;
(c) inputting, on the user interface window, a target uniform resource locator (URL), a keyword and preset depth first search (DFS) information and sending them to the server module;
(d) searching, at the server module, Web sites corresponding to the target URL and URL's of lower layers linked thereto based on the URL and the DFS information;
(e) extracting Web information corresponding to the keyword from Web pages of the searched sites;
(f) processing and storing the extracted information as a single user file;
(g) repeating the steps (d) to (f) until arriving lower layer's URL corresponding to the DFS information; and
(h) sending the stored information to the client module to enable the user to browse the information using the Web browser.

In accordance with another preferred embodiment of the present invention, there is provided an apparatus for Web information extraction service in an intelligent agent system comprising a client module and a server module, wherein the client module includes:
means for driving and connecting the Web browser to the server module;
means for downloading Java applet from the server module to form a user interface window;
means for inputting a target uniform resource locator (URL), a keyword and preset depth first search (DFS) information and sending them to the server module; and the server module includes:
means for searching Web sites corresponding to the target URL and URL's of lower layers linked thereto based on the URL and the DFS information;
means for extracting Web information corresponding to the keyword from Web pages of the searched sites;
means for processing and storing the extracted information as a single user file;
means for sending the stored information to the client module when arriving lower layer's URL corresponding to the DFS information, to enable the user to browse the information using the Web browser.

The above and other objects and features of the present invention will become apparent from the following description of preferred embodiments given in conjunction with the accompanying drawings, in which:
Fig. 1 is a schematic diagram for explaining the overall concept of a novel WIE for extracting Web information in a hyper space in accordance with the present invention;
Fig. 2 offers a detailed block diagram of the WIE in accordance with the invention;
Fig. 3 presents a WIE user interface created through a Java applet downloaded in accordance with the invention; and
Figs. 4A and 4B shows diagrams illustrating a hyperlink connection structure and an A-edge eliminated tree structure, respectively.

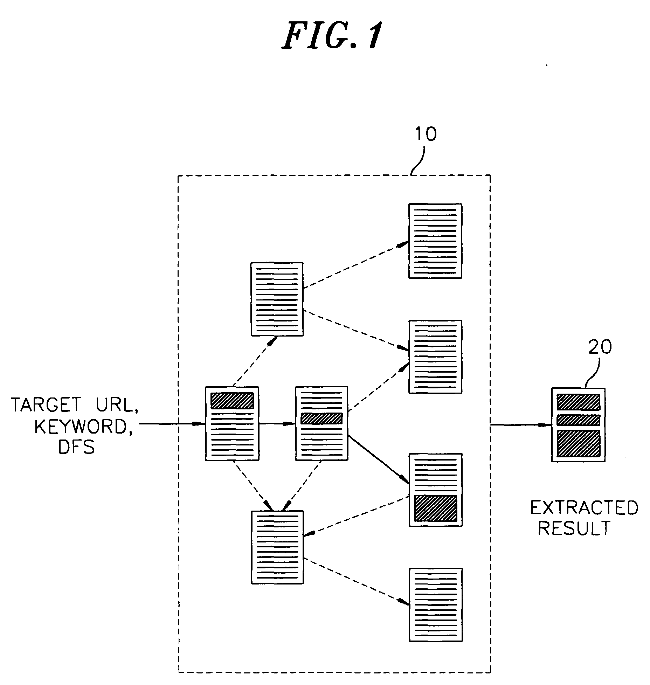

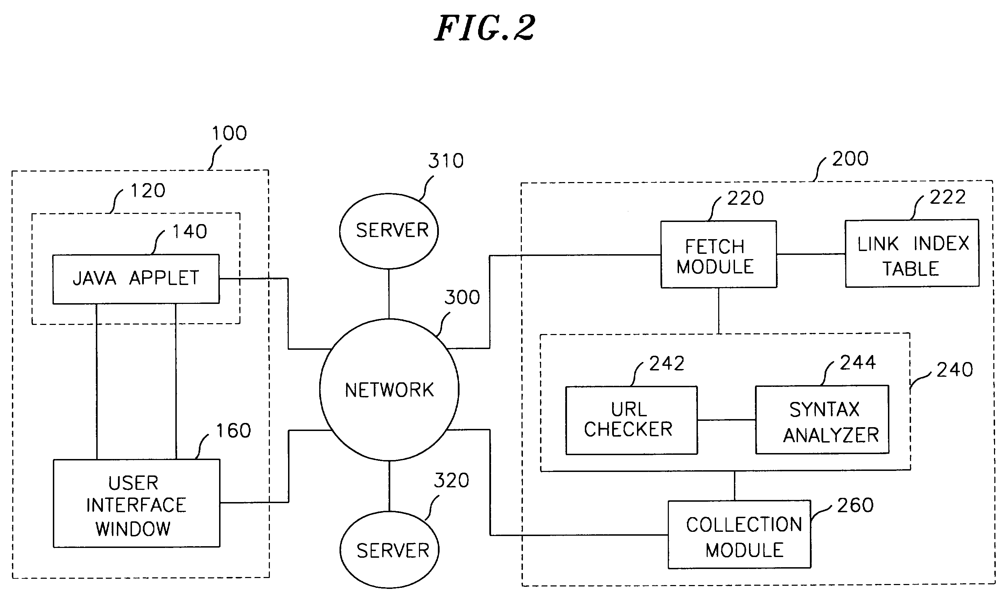

With reference to Fig. 1, there is provided a diagram illustrating the overall concept of a novel WIE for extracting Web information in a hyper space 10 in accordance with an embodiment of the present invention. In Fig. 1, there are illustrated three Web pages containing qualified pieces of information relevant to a keyword given by a Web user, wherein solid arrows indicate search paths while broken arrows indicate disqualified links. The WIE of the present invention includes three main functions: hyperlink traversal for finding desired information pieces, searching and collecting them into a user file. These functions are performed in accordance with a target URL provided from a search engine (not shown), a keyword and a depth first search (DFS) information, as depicted in Fig. 1. Consequently, the WIE provides the user with an extracted result 20 in the form of a single user file, which is obtained on the basis of the functions. Details of such functions will be provided with reference to Figs. 2 to 4 below.

The WIE of the present invention, which will fully be explained later, employs four distinct features as follows. Firstly, the WIE employs a simple search-by-keyword operation for the reason that keyword-based Web search is the easiest and the most commonly used method by the Web users. Secondly, the WIE provides a single user file to the user by collecting several paragraphs, each containing a submitted keyword or keyword predicate. Thus, the user can benefit from the condensed data of his or her interest. Thirdly, the WIE provides a convenient user interface implemented with Java applet running on an Internet Web browser. This will enable the user to easily take advantage of all Java programming capabilities for better Internet operations. Finally, the WIE refines the service of the existing search engines rather than substitutes their services, by using a target URL as a search term.

There are two possible approaches in the implementation of the WIE service over the Internet: implementation at a client module or server module. In a preferred embodiment of the invention, it is assumed that the latter approach is chosen for two following reasons. First, by offering the WIE service at the server module, Web users can be exempted from harnessing additional software on their clients. Second, the WIE can make use of more computing capability at the server module in a way similar to other search engines. The WIE can also be incorporated in an existing search engine to provide an extended content extraction service.

Turning now to Fig. 2, there is shown a high level architecture of the WIE in accordance with the invention. The WIE comprises a client module 100 running on a client computer (not shown) and a Java agent (or server module) 200 running on a server computer (not shown). The client module 100 allows the user to submit queries for the hyperlink traversal and data collection. The client module 100 requires a target URL address and a simple keyword as its inputs. For this implementation, there is used a downloadable Java applet 140 running on a Web browser 120 so that the client module 100 can make use of most Java programming capabilities. A user interface (UI) window 160 in the client module 100 serves to interface the Java applet 140 to the server module 200 via a network 300. In other words, the UI window 160 is generated through the Java applet 140 downloaded to maintain a connection with the Java agent implemented on the server module 200 via a given socket or channel.

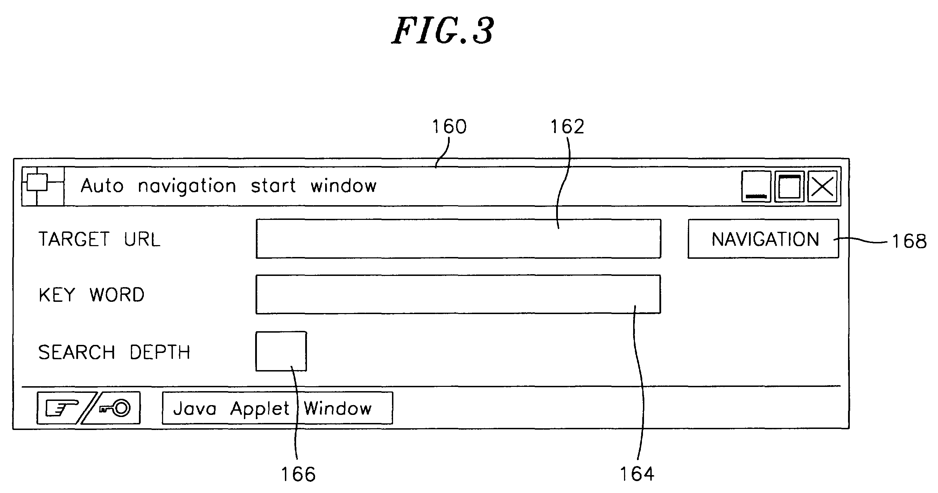

Referring to Fig. 3, there is depicted a schematic diagram of the UI window 160 in accordance with the present invention. In the UI window 160 of the present invention, as shown, there are provided three input fields 162, 164, 166, and a start button 168 for starting a contents search navigation procedure in accordance with the embodiment of the invention. Among the input fields, the first field 162 is used to input the target URL, the second field 164 is used to input a keyword designating Web information the user wants, and the third field 166 is utilized to input DFS information. The target URL denotes one of URL's to be searched through the Web browser 120 and the DFS information indicates the depth of layers of URL's linked in a hierarchical structure. All the information inputted through the input fields 162, 164, 166 are provided to the server's Java agent 200 upon a pressure of the start button 168.

Referring back to Fig. 2, the server module 200 includes a fetch module (FM) 220, a link index table 222, a search module (SM) 240 and a collection module (CM) 260. The FM 220 is connected to a Web server, e.g., one of servers 310 and 320, corresponding to the target URL, and fetches hyper text mark-up language (HTML) pages from the Web server, wherein hyperlink traversal and paragraph extraction operations are performed based on the target URL, the keyword and the DFS information. For multiuser, the module 220 also manages query identifications (ID's) to guarantee that resulting files are directed to correspondig query issuers.

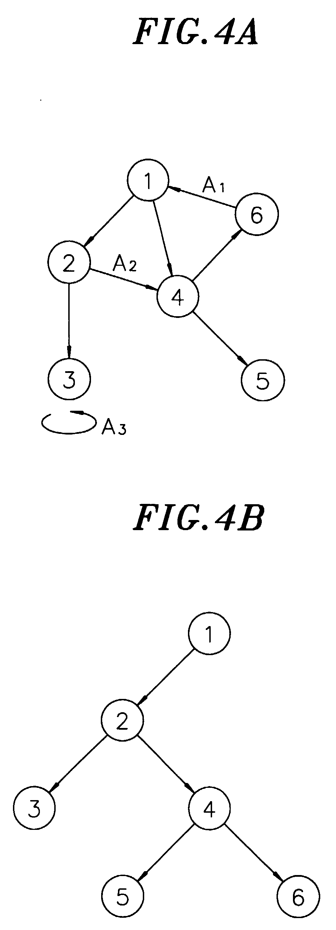

The SM 240 interacts with two submodules, a URL checker 242 and a syntax analyzer 244, to implement a hyperlink traversal algorithm, wherein details of the hyperlink traversal algorithm will fully be provided with reference to Figs. 4A and 4B later. The URL checker 242 is used to exclude hyperlinks pointing to irrelevant URLs that are either not in the HTML format (e.g., ps, doc, and ppt) or no HTTP protocol (e.g., mail, ftp, and gopher). The syntax analyzer 244 is responsible for making the resulting document organized in the HTML format so that the user can refer back to the original document whenever desired. Also the analyzer 244 supports the semantic arrangement among information pieces extracted from different Web pages. Meanwhile, during the hyperlink traversal by the SM 240, the CM 260 finds the related information pieces out of Web pages that have been fetched by the FM 220, and then collects them for later delivery to the user. The FM 220 and the CM 260 are recursively operated during the hyperlink traversal by the SM 240.

Finally, by the implementation of the invention, the support of multithread concurrency for multiuser's access to the WIE can be achieved. With this configuration, the WIE provides client transparent connection and execution serving multiple users. Each thread plays a proxy role for a client's request. When the WIE receives a request, a thread (or proxy) is created and a connection between the thread and client is established. Once the connection is established, the WIE continues to maintain the connection until the result of the request is provided to the client.

Referring to Fig. 4A, A1, A2 and A3 are pointing to nodes 1, 4 and 3, respectively, and thus do not make a hierarchical tree structure. Hyperlink connections form a hierarchical tree for a document with many irregular edges that do not conform to the hierarchical tree structure. The irregular edges are called anti-hierarchical edges or A-edges simply. When these edges are removed, the hyperlink connection turns into a tree structure as shown in Fig. 4B so that a conventional DFS traversal algorithm can be applied. Consequently, the present invention is capable of improving the DFS traversal algorithm by detecting and eliminating the A-edges. During the link traversal by the FM 220 and the SM 240, paragraph collection is carried out by the CM 260.

For the hyperlink traversal, the DFS traversal algorithm allows the WIE service to maintain the hierarchical semantics of the original document (i.e., chapters, sections and subsections) in the extracted results. In the implementation of the invention, A-edge elimination algorithm is carried out by using a link index table (LIT) 222, as shown in Fig. 2, which records nodes that have been visited during the hyperlink traversal. Before traversing a node, the LIT 222 is looked up to determine whether or not a corresponding link is previously visited. The A-edge elimination algorithm of the invention is summarized as follows:
1. Given a query containing a target URL and a keyword (or keyword predicate), the FM 220 assigns a query ID.
2. The target URL becomes a root node for the subsequent page traversal.
3. There are two possible circumstances when the SM 240 examines the content of a page corresponding to the keyword as a search term.
   3.1 When the keyword is found in a plain text during the search, the CM 260 extracts a corresponding paragraph (as a container) under the query ID.
   3.2 When the keyword is found in a hyperlink address or description, the SM 240 records the address in the LIT 222 for later elimination of A-edges. Thus, all the traversed index links will be recorded in the LIT 222.
4. Whenever the SM 240 detects a hyperlink, it looks up the LIT 222 to determine whether the hyperlink is an A-edge or not. If there is the address of the hyperlink in the LIT 222, it is regarded as an A-edge so that the SM 240 skips visiting the corresponding node. When a link is identified to be a qualified one to traverse, the FM 220 fetches a corresponding page and the above item 3 is repeated.
5. When the recursive traversals for all child nodes are completed, the A-edge elimination algorithm is terminated. Finally, the CM 260 notifies the query issuer of the result of whole process in terms of a URL ad*p+1Xdress. Thus, the user can view the extracted information on the Web browser using the URL address provided from the WIE.

By adding further functionalities to the WIE service, the present invention allows the user to specify any traversal depth as a partial input in the query. By doing so, the user can receive a quick response for some limited amount of return whenever desired. However, it may be recognized to those skilled in the art that, in general, the traversal depth for most Web documents is negligibly small.

As can be seen from the above, the content extraction algorithm of the present invention provides a significant advantage over the prior art manual extraction on several benchmark documents of different sizes. For instance, if the size of document is small, e.g., if it is smaller than 2⁴ Kbytes, there will not be big difference in the both approaches. If the document size is large, e.g., if it is larger than 2¹³ Kbytes, however, the WIE approach of the invention outperforms the other with the ratio of 22 (note that when many pages are involved more manual operations are required). From the above, it is concluded that the efficiency of the WIE improves significantly as the document size increases.

While the invention has been shown and described with respect to the preferred embodiments, it will be understood by those skilled in the art that various changes and modifications may be made without departing from the scope of the invention as defined in the following claims. The features disclosed in the foregoing description, in the claims and/or in the accompanying drawings may, both separately and in any combination thereof, be material for realising the invention in diverse forms thereof.

## Claims

1. A method for Web information extraction service in an intelligent agent system having a client module and a server module, the method comprising the steps of:
(a) driving and connecting a Web browser contained in the client module to the server module;
(b) downloading, at the client module, Java applet from the server module to form a user interface window;
(c) inputting, on the user interface window, a target uniform resource locator (URL), a keyword and preset depth first search (DFS) information and sending them to the server module;
(d) searching, at the server module, Web sites corresponding to the target URL and URL's of lower layers linked thereto based on the DFS information;
(e) extracting Web information corresponding to the keyword from Web pages of the searched sites and processing and storing the extracted information as a single user file;
(f) repeating the steps (d) to (e) until all lower layer URL's corresponding to the DFS information are processed; and
(g) sending the stored information to the client module to enable the user to browse the information using the Web browser.

2. The method of claim 1, wherein the server module is a Java agent system based on a Java language.

3. The method of claim 1, wherein the step (d) includes the steps of:
(d1) hierarchically searching the Web sites of the target URL and the lower layer's URL's by using the DFS information;
(d2) determining whether or not each searched site's information exists within a set of previously searched site's information stored in a look up table; and
(d3) if it is determined at the step (d2) that said each searched site's information is within the set of previously searched site's information, excluding said each site's information.

4. The method of claim 2, wherein the step (d) further includes the steps of:
(d4) checking whether or not each of the searched sites is based on a preset communications protocol, and if not, excluding said each site.

5. The method of claim 4, wherein the preset communications protocol is a hypertext transfer protocol.

6. The method of claim 1, wherein the user interface window is connected to the server module via a socket which is independent of the Web browser.

7. An apparatus for Web information extraction service in an intelligent agent system comprising a client module and a server module,
wherein the client module includes:
means for driving and connecting a Web browser contained in the client module to the server module;
means for downloading Java applet from the server module to form a user interface window; and
means for inputting a target uniform resource locator (URL), a keyword and preset depth first search (DFS) information and sending them to the server module; and the server module includes:
means for searching Web sites corresponding to the target URL and URL's of lower layers linked thereto based on the DFS information;
means for extracting Web information corresponding to the keyword from Web pages of the searched sites and processing and storing the extracted information as a single user file; and
means for sending the stored information to the client module when all lower layer's URL corresponding to the DFS information are processed, to enable the user to browse the information using the Web browser.

8. The apparatus of claim 7, wherein the server module further includes means for storing the Web information.

9. The apparatus of claim 7, wherein the inputting means is operated by using three input fields prepared on the user interface window.
